# EUROPÄISCHE PATENTSCHRIFT

(11) **EP 1 140 461 B1**
(45) Veröffentlichungstag und Bekanntmachung des Hinweises auf die Patenterteilung: **18.06.2003**
(21) Anmeldenummer: 99963534.5
(22) Anmeldetag: 14.12.1999
(51) Int. Cl.: B29C 47/08

(54) **REINIGUNGSMASSE FÜR EXTRUDER**
CLEANING MATERIAL FOR EXTRUDERS
PRODUIT DE NETTOYAGE POUR EXTRUDEUSE

(30) Priorität: 18.12.1998 DE 19858672
(43) Veröffentlichungstag der Anmeldung: 10.10.2001
(73) Patentinhaber: BASF AKTIENGESELLSCHAFT, 67056 Ludwigshafen (DE)
(72) Erfinder: KOCH, Uwe, D-67229 Gerolsheim (DE); KLENZ, Rainer, D-67454 Ha loch (DE); FRIEL, PETER, D-67227 Frankenthal (DE); GAREISS, Brigitte, D-67271 Obersülzen (DE)
(74) Vertreter: Isenbruck, Günter, Dr.
(86) Internationale Anmeldenummer: EP9909932
(87) Internationale Veröffentlichungsnummer: WO00037236

(56) Entgegenhaltungen:
- EP-A- 0 333 408
- EP-A- 0 800 910
- WO-A-95/17268
- WO-A-97/44395
- US-A- 3 869 525
- PATENT ABSTRACTS OF JAPAN vol. 012, no. 262 (M-721), 22. Juli 1988 (1988-07-22) & JP 63 047117 A (MITSUBISHI HEAVY IND LTD), 27. Februar 1988 (1988-02-27)
- PATENT ABSTRACTS OF JAPAN vol. 004, no. 139 (M-034), 30. September 1980 (1980-09-30) & JP 55 095545 A (HITACHI CHEM CO LTD), 19. Juli 1980 (1980-07-19)
- PATENT ABSTRACTS OF JAPAN vol. 004, no. 136 (M-033), 24. September 1980 (1980-09-24) & JP 55 093436 A (HITACHI CHEM CO LTD), 15. Juli 1980 (1980-07-15)
- PATENT ABSTRACTS OF JAPAN vol. 016, no. 490 (C-0994), 12. Oktober 1992 (1992-10-12) & JP 04 180964 A (ASAHI CHEM IND CO LTD), 29. Juni 1992 (1992-06-29)
- PATENT ABSTRACTS OF JAPAN vol. 014, no. 231 (M-0974), 16. Mai 1990 (1990-05-16) & JP 02 060727 A (MITSUBISHI KASEI CORP), 1. März 1990 (1990-03-01)

## Beschreibung

Die Erfindung betrifft eine Reinigungsmasse für Vorrichtungen zur Verarbeitung von thermoplastischen Schmelzen.

Bei der Verarbeitung von Thermoplasten auf Schneckenmaschinen ist der Wechsel von einem Thermoplasten auf den anderen häufig mit langen Zwischenlaufzeiten verbunden. Das ist dadurch bedingt, daß bei dem Wechsel von einem Material auf ein anderes thermoplastische Schmelze des bisher verwendeten Materials in der Schneckenmaschine zurückbleibt. Diese Reste werden bei einer Umstellung allmählich ausgetragen und verunreinigen die so hergestellten Formteile und Halbzeuge, so daß diese verworfen werden müssen. Ein solcher Materialwechsel kann sich über Stunden und Tage hinziehen, was zu hohen Kosten in Bezug auf Energie und Rohstoffbedarf, zu erheblichem Zeitaufwand und entgangener Maschinennutzung führt. Dies trifft insbesondere dann zu, wenn die zu wechselnden Materialien Thermoplasten sind, die sich hinsichtlich der Verarbeitungstemperatur und/oder ihrem chemischen Aufbau oder ihrer Zusammensetzung unterscheiden, wenn ein Wechsel von dunklen auf helle Farben oder von einem undurchsichtigen Produkt auf einen transparenten oder glasklaren Thermoplasten, wie beispielsweise Polystyrol, erforderlich wird.

Um diesen Vorgang zu beschleunigen, war es im Stand der Technik üblich, den Extruder außer Betrieb zu nehmen, Zylinder und Schnecke zu demontieren, zu reinigen und anschließend im gereinigten Zustand wieder zu montieren. Das Abschalten des Extruders und das anschließende Reinigen verursachte nicht nur erhebliche Kosten, sondern führte durch die Verwendung von Werkzeugen auch zu einer Beschädigung der Innenwandungen der Extruderteile. Zudem besteht bei der Demontage ein hohes Risiko der Beschädigung der Anbauteile, wie z.B. Thermoelemente oder Dichtungen.

Um diese umständliche Verfahrensweise zu vermeiden, ist im Stand der Technik durch die DE-A-23 21 883 auch bekannt geworden, eine Reinigungsmasse zu verwenden, die in den Extrudereinlaß eingespeist und durch den Extruder gefördert wird, bis die Extruderwandungen frei sind von Materialresten, insbesondere von inkrustierten Materialresten. Dies wird erreicht durch eine Zusammensetzung der Reinigungsmasse, die aus einem spröden thermoplastischen Polymeren besteht, das in ein zweites Polymer eingebettet wird. Die Reinigungstemperatur im Extruder wird so gesteuert, daß sich dieses zweite Polymer bei dem Reinigungsvorgang in einem flüssigen oder fließfähigen Zustand befindet. Es bildet somit einen Träger für die Partikel des ersten Polymers. Wesentlich für das spröde Polymer ist, daß es beim Durchgang durch die Extruderschnecke zerstoßen oder zerkleinert werden kann. Die Reinigungswirkung dieser Masse besteht darin, daß die zerstoßenen oder zerkleinerten Polymerpartikel die Ablagerungen in den verschmutzten Zonen des Extruders durch Abscheuern lösen und entfernen. Die flüssige oder fließfähige zweite Polymerkomponente hat die Aufgabe, die Partikel des ersten spröden Polymeren durch den Extruder zu befördern und von den Oberflächen der Extruderinnenwandungen losgelöste Ablagerungen aufzunehmen.

Nachteilig bei diesem Verfahren ist, daß auch hier durch das Verwenden von spröden, durch Zerkleinern gegebenenfalls auch spitzen Polymerpartikeln, die das Abscheuern der Innenwandungen der Extruderteile bewirken sollen, Beschädigungen erfolgen können. Außerdem besteht die Gefahr, daß die zerstoßenen oder zerkleinerten spröden Polymerpartikel dieser bekannten Reinigungsmasse sich in Hohlräumen des Extruders oder insbesondere beim Durchgang durch sich verjüngende Verbindungs- oder Zwischenstücke stecken bleiben und somit den Extruder verstopfen, so daß er doch manuell gereinigt werden muß. Außerdem ist diese Reinigungsmasse für solche Thermoplasten nicht geeignet, die über der Sprödigkeitstemperatur des eingesetzten, zerkleinerten ersten Polymers schmelzen, da dann die Polymerpartikel erweichen, ihre Sprödigkeit und somit ihre reinigende Wirkung verlieren.

Durch die DE-A-38 02 127 ist ein Verfahren zur Reinigung von Extrudern bekannt geworden, bei dem ein oder mehrere organische oder anorganische Salze zusammen mit einem oder mehreren organischen oder anorganischen Lösungsmitteln, in denen sich das jeweilige Salz löst, durch den Extruder gefördert werden. Nachteilig an diesem Verfahren ist, daß durch den Einsatz der Lösungsmittel Korrosion im Bereich der Einzugszone der Schnecke des Extruders auftreten kann. Außerdem zwingt der entstehende Lösungsmitteldampf in dem heißen Extruder zu besonderen Schutz- und Vorsichtsmaßnahmen. Nach diesem Verfahren können Entgasungschnecken nur nach Verschließen der Entgasungsöffnung gereinigt werden, da das Lösungsmittel im drucklosen Bereich entweicht.

Die JP-A 55093436 beschreibt eine Reinigungsmasse gemäß dem Oberbegriff des Anspruchs 1 zum Entfernen von Kunststoff aus Extrudern, die aus einer Mischung eines Styrolharzes und eines kristallinen, linearen Polyesterharz besteht. Das Polyesterharz weist einen Schmelzpunkt auf, der über der Verarbeitungstemperatur des Styrolharzes liegt. Die Reinigungsmasse wird bei einer Temperatur eingespritzt, die höher als die Verarbeitungstemperatur des Styrolharzes und niedriger als die Verarbeitungstemperatur des Polyesterharzes liegt, in einer ersten Stufe. In einer zweiten Stufe wird bei einer Temperatur gereinigt, die höher als der Schmelzpunkt des Polyesterharzes ist.

Aus der JP-A 55095545 ist eine Reinigungsmasse gemäß dem Oberbegriff des Anspruchs 1 zum Reinigen von Extrudern bekannt, die aus einem Styrolharz, vorzugsweise Acrylnitril-Acrylkautschuk-Styrol, und einem kristallinen Polyesterharz besteht. Das Polyesterharz hat eine höhere Schmelztemperatur als die Verarbeitungstemperatur des Harzes A. Bei dem Polyesterharz handelt es sich vorzugsweise um Polyethylenterephthalat. Die Reinigung wird bei zwei verschiedenen Temperaturen in zwei Stufen durchgeführt, die jeweils über den Schmelzpunkten der Harzmischung liegen. Diese Temperaturen sind beispielsweise 190 bis 230 °C in der ersten Stufe und 240 bis 280 °C in der zweiten Stufe.

Ausgehend vom diesen Stand der Technik lag der vorliegenden Erfindung daher die Aufgabe zugrunde, eine Reinigungsmasse für Vorrichtungen zur Verarbeitung thermoplastischer Schmelzen bereitzustellen, durch die eine Beschädigung der Extruderinnenwände oder ein Verstopfen beim Durchgang durch sich verjüngende Teile des Extruders wirksam vermieden werden kann und gleichzeitig eine hohe Reinigungswirkung erzielt wird.

Diese Aufgabe wird gelöst durch eine Reinigungsmasse gemäß dem Anspruch 1, die im wesentlichen diskrete, plastisch deformierbare Teilchen aus einem Thermoplast (A) (erster Thermoplast) mit einem Schmelzpunkt über 250°C und einer Kristallinität von kleiner oder gleich 50% und einen amorphen oder teilkristallinen Thermoplasten (B) (zweiter Thermoplast) mit einer Verarbeitungstemperatur, die unterhalb des Schmelzpunktes des Thermoplasten (A) liegt, enthält, wobei der Thermoplast (A) mit 1 bis 95 Gew.-% und der Thermoplast (B) mit 5 bis 99 Gew.-% zugegen sind, und sich die gewichtsprozentualen Anteile von (A) und (B) jeweils zu 100% oder weniger ergänzen. Der Thermoplast (A) ist ausgewählt aus der Gruppe bestehend aus teilaromatischen Polyamiden, Polysulforaten, Polyethersulfonaten, Polyaryletherketonen, Polyetheretherketonen, Polyphenylenethylen oder Mischungen davon.

Bei der erfindungsgemäßen Reinigungsmasse wirken die im wesentlichen diskreten, plastisch deformierbaren Teilchen aus dem Thermoplasten (A) in sehr effektiver Weise reinigend, während der amorphe oder teilkristalline Thermoplast (B) als flüssiger oder fließfähiger Träger für die plastisch deformierbaren Teilchen aus dem Thermoplast (A) und/oder abgelösten Verunreinigungen wirkt. Durch die sehr effektive Reinigungswirkung verläuft der Wechsel von einem auf das nächste Material sehr schnell, auch dann, wenn ein Werkstoffwechsel von dunklen Farben oder schwarz auf helle Farben oder von einem undurchsichtigen oder farbigen Material auf ein glasklares Material vorgenommen werden soll.

Besonders vorteilhaft ist auch, daß sich die reinigende Wirkung von (A) nicht nur dann zeigt, wenn das verwendete Polymer (B) einen Schmelzpunkt unterhalb der Sprödigkeitstemperatur (Tg) aufweist, sondern daß grundsätzlich jedes Polymer (B) geeignet ist, dessen Schmelzpunkt unter dem des Polymeren (A) liegt.

Des weiteren ist vorteilhaft, daß die plastisch deformierbaren Teilchen aus dem Thermoplasten (A) auch Verjüngungen im Extruder, beispielsweise bei Zwischenoder Verbindungsstücken, problemlos passieren können. Sie werden aufgrund ihrer plastischen Deformierbarkeit im Extremfall zu langen dünnen Fäden auseinandergezogen. Entsprechend kann die Reinigungsmasse auch in Kavitäten mit dünnen Formteilwanddicken von z.B. 0,4 mm eingespritzt werden. Von besonderem Vorteil ist auch, daß bei Spritzgießmaschinen die Demontage der Maschinendüse entfällt. Auch Verschlußdüsen können auf der Maschine belassen werden. Der Reinigungsvorgang kann auch bei Werkzeugen mit Heißkanal durchgeführt werden. Weil die Reinigungsmasse durch den Heißkanal in die Kavität gespritzt werden kann, läßt sich der Materialwechsel im Heißkanal beschleunigen.

Es wurde außerdem festgestellt, daß die Verschleißrate der beanspruchten Reinigungsmasse äußerst gering ist und nach Versuchen mit einer Modellverschleißmethode für strömende plastifizierte Kunststofformmassen dem Verschleiß eines nicht gefüllten, d.h. unverstärkten Thermoplasten entspricht ("Verschleiß in der Kunststoffverarbeitung: Phänomene und Schutzmaßnahmen", Günter Menning, Hanser Verlag 1990, Seiten 194-197).

Die gewichtsprozentualen Anteile von Thermoplast (A) zu Thermoplast (B) können 5-30 : 70-95 Gew.%, bevorzugt 5-25 : 75-95 Gew.-% und besonders bevorzugt 7-15: 85-93 Gew.-% betragen.

Die teilaromatischen Polyamide können beispielsweise aufgebaut sein aus Terephtalsäure, Isophtalsäure, Caprolactam, Adipinsäure, Hexamethylendiisocyanat, m-Xylendiamin und/oder 2-Methylpentamethylendiamin.

Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist.

Derartige teilaromatische, teilkristalline Copolyamide sind beispielsweise aufgebaut aus Einheiten, die sich von Terephthalsäure und Hexamethylendiamin ableiten. Solche Einheiten können in einem Anteil von 20 - 90 Gew.-% enthalten sein.

Neben diesen Einheiten enthalten die Copolyamide Einheiten, die sich von ε-Caprolactam ableiten und/oder Einheiten, die sich von Adipinsäure und Hexamethylendiamin und/oder Einheiten, die sich von weiteren polyamidbildenden Monomeren ableiten.

Gew.-%, vorzugsweise 20 bis 50 Gew.-%, insbesondere 25 bis 40 Gew.-%, während der Anteil an Einheiten, die sich von Adipinsäure und Hexamethylendiamin ableiten, bis zu 80 Gew.-%, vorzugsweise 30 bis 75 Gew.-% und insbesondere 35 bis 60 Gew.-% beträgt.

Die Copolyamide können auch sowohl Einheiten von ε-Caprolactam als auch Einheiten von Adipinsäure und Hexamethylendiamin enthalten; in diesem Fall ist es von Vorteil, wenn der Anteil an Einheiten, die frei von aromatischen Gruppen sind, mindestens 10 Gew.-% beträgt, vorzugsweise mindestens 20 Gew.-%. Das Verhältnis der Einheiten, die sich von ε-Caprolactum und von Adipnsäure und Hexamethylendiamin ableiten, unterliegt dabei keiner besonderen Beschränkung.

Als vorteilhaft sind solche Polyamide zu nennen, die 50 bis 80, insbesondere 60 bis 75 Gew.-% Einheiten, die sich von Terephthalsäure und Hexamethylendiamin ableiten und 20 bis 50, vorzugsweise 25 bis 40 Gew.-% Einheiten, die sich von ε-Caprolactam ableiten, enthalten.

Die teilaromatischen Copolyamide können außerdem bis zu 40, vorzugsweise 10 - 30 Gew.-% und insbesondere 20 - 30 Gew.-% weiterer polyamidbildender Monomere enthalten; wie sie von anderen Polyamiden bekannt sind. Dabei sind aromatische Dicarbonsäuren zu nennen, die 8 bis 16 Kohlenstoffatome aufweisen. Geeignete aromatische Dicarbonsäuren sind beispielsweise Isophthalsäure, substituierte Terephthal- und Isophthalsäuren, wie 3-t-Butylisophthalsäure, mehrkernige Dicarbonsäuren, z.B. 4,4'- und 3,3'-Diphenyldicarbonsäure, 4,4'- und 3,3'-Diphenylmethandicarbonsäure, 4,4'- und 3,3'-Diphenylsulfondicarbonsäure, 1,4-oder 2,6-Naphthalindicarbonsäure, Phenoxyterephthalsäure, wobei Isophthalsäure besonders bevorzugt ist.

Weitere polyamidbildende Monomere können sich von Dicarbonsäuren mit 4 bis 16 Kohlenstoffatomen und aliphatischen oder cycloaliphatischen Diaminen mit 4 bis 16 Kohlenstoffatomen sowie von Aminocarbonsäuren bzw. entsprechenden Lactamen mit 7 bis 12 Kohlenstoffatomen ableiten. Als geeignete Monomeren dieser Typen sind unter anderem Suberinsäure, Azelainsäure oder Sebacinsäure als Vertreter der aliphatischen Dicarbonsäuren, 1,4-Butandiamin, 1,5-Pentandiamin, Piperazin als Vertreter der Diamine und Capryllactam, Önanthlactam, ω-Aminoundecansäure und Laurinlactam als Vertreter von Lactamen bzw. Aminocarbonsäuren zu nennen.

Hierbei sind folgende Zusammensetzungen der Komponente (A) besonders bevorzugt:
65 bis 85 Gew.-% Einheiten, die sich von Terephthalsäure und Hexamethylendiamin ableiten und 15 bis 35 Gew.-% Einheiten, die sich von Isophtalsäure und Hexamethylendiamin ableiten
   oder
50 bis 70 Gew.-% Einheiten, die sich von Terephthalsäure und Hexamethylendiamin ableiten und 10 bis 20 Gew.-% Einheiten, die sich von Adipinsäure und Hexamethylendiamin ableiten und 20 bis 30 Gew.-% Einheiten, die sich von Isophthalsäure und Hexamethylendiamin ableiten.

Sind cyclische aliphatische Diamine als Polyamidbausteine enthalten so sind hierbei insbesondere als Diaminkomponenten Bis (4-aminocyclohexyl)-methan, Bis (4-amino-3-methylcyclohexyl)methan, Bis (4-aminocyclohexyl)-2,2-propan, Bis (4-amino-3-methylcyclohexyl)-2,2-propan, Cyclohexandiamin und Isophorondiamin bevorzugt. Derartige teilaromatische, teilkristalline Polyamide werden in der DE-A 44 04 250 beschrieben.

Weiterhin haben sich solche teilaromatischen Copolyamide als besonders vorteilhaft erwiesen, deren Triamingehalt weniger als 0,5, vorzugsweise weniger als 0,3 Gew.-% beträgt. Die Herstellung dieser Copolyamide kann nach den in den EP-A 129 195 und 129 196 beschriebenen Verfahren erfolgen.

Zu den geeigneten Polymeren zählen auch (Co)polymere, aufgebaut aus folgenden wiederkehrenden Einheiten :

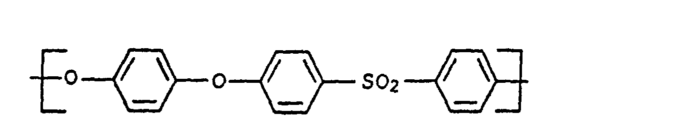

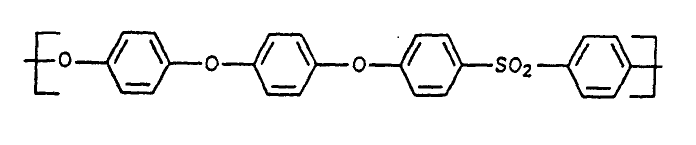

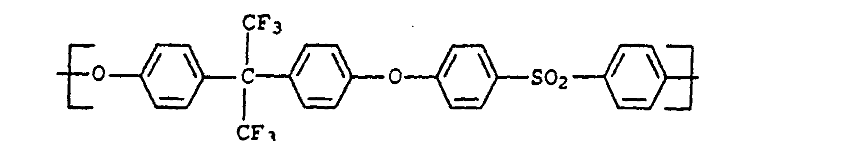

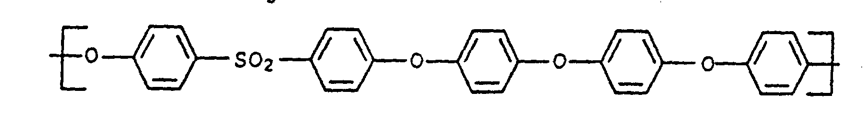

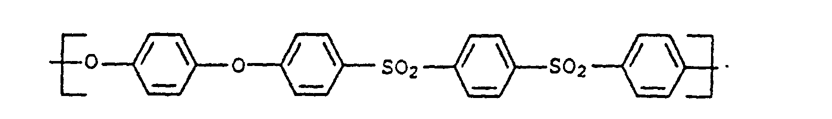

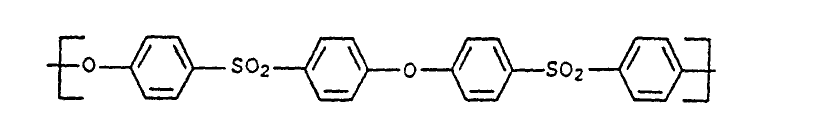

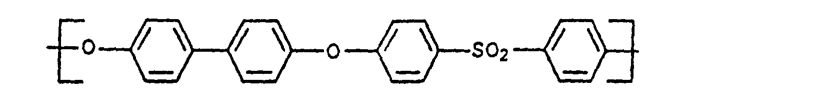

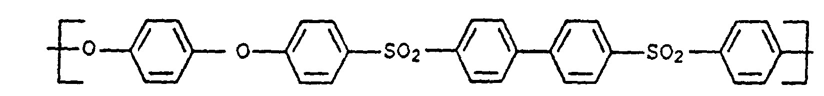

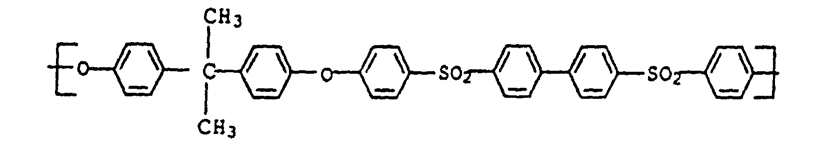

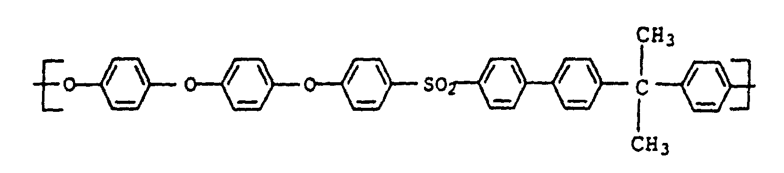

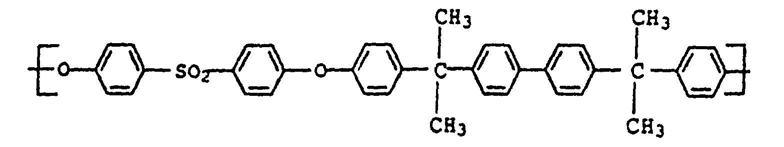

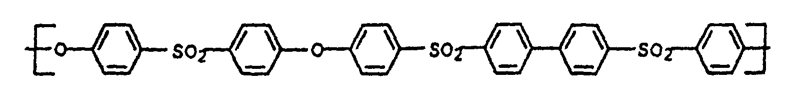

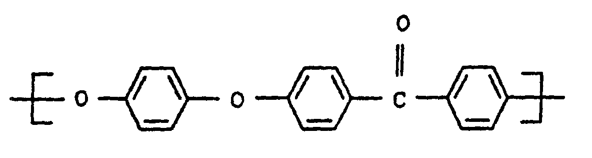

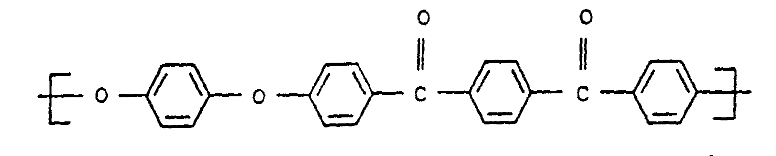

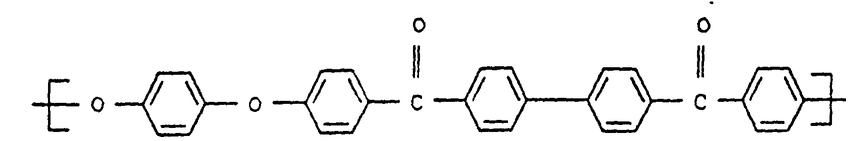

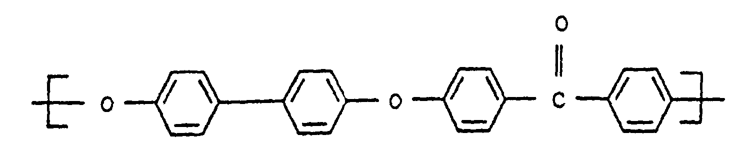

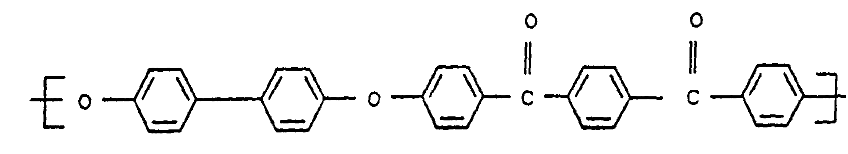

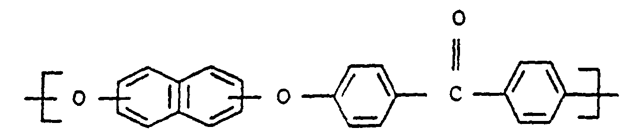

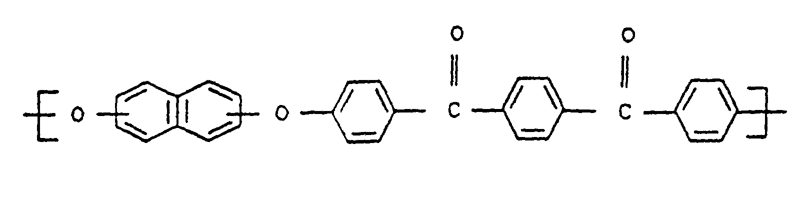

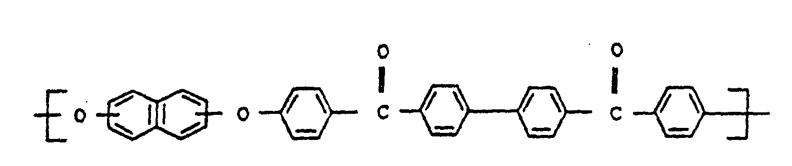

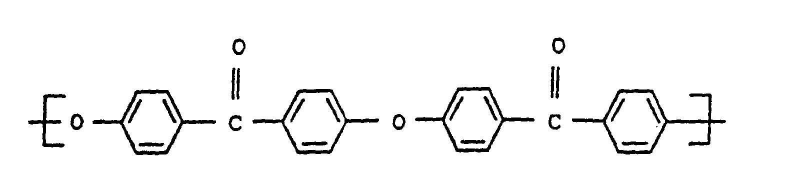

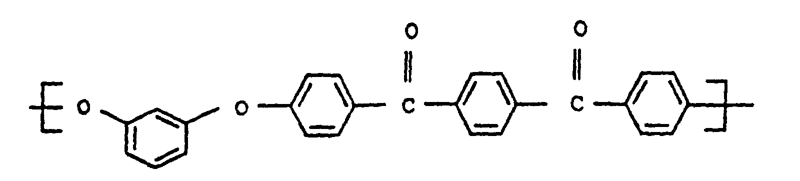

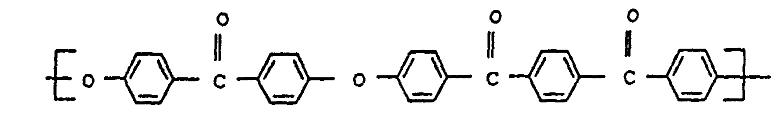

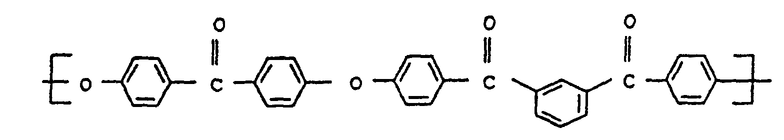

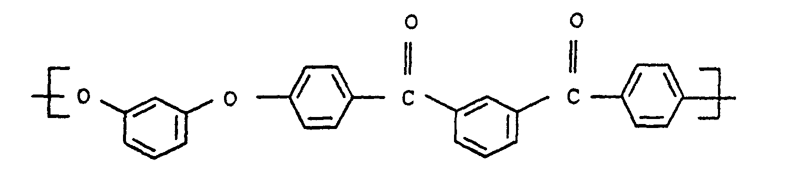

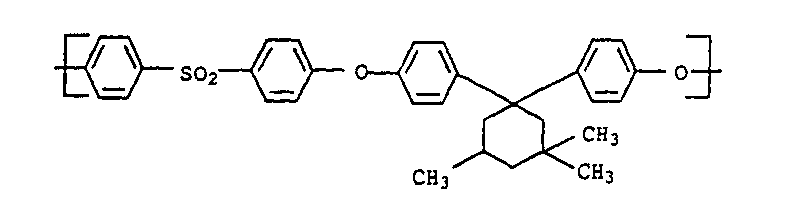

Zu den besonders bevorzugten Polymeren zählen solche mit 0 bis 100 Mol-% wiederkehrenden Einheiten der Formel (II): 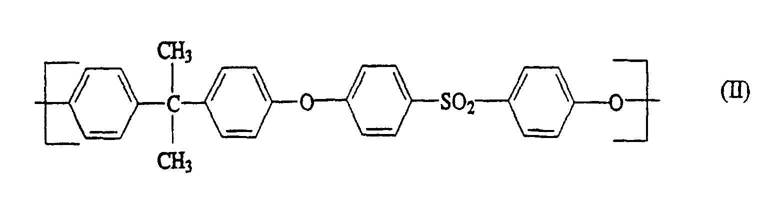 und 0 bis 100 Mol-% wiederkehrenden Einheiten der Formel (III):

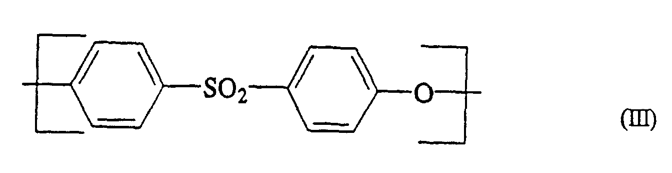

Die Molprozentangabe bezieht sich auf den Gehalt an SO₂-Gruppen. Besonders bevorzugt werden die Polymere mit 3 bis 97 Mol-% wiederkehrenden Einheiten der Formel (II) und 3 bis 97 Mol-% wiederkehrenden Einheiten der Formel (III) als Thermoplast (A) eingesetzt.

Polyaryletherketone, die ebenfalls als Thermoplast (A) in der erfindungsgemäßen Reinigungsmasse eingesetzt werden können, sind an sich bekannt und Methoden zu ihrer Herstellung sind auch in der Literatur beschrieben.

Bevorzugte Polyaryletherketone enthalten sich wiederholende Einheiten der allgemeinen Formel (IV)

(O-Ar¹)ₓ-(T-Ar²)_{y}-OAr³-CO-(Ar⁴-Q_{z})-Ar⁵ (IV)

Darin können Ar¹ bis Ar⁵ gleich oder verschieden voneinander sein und unabhängig voneinander einen aromatischen Rest mit 6 bis 18 C-Atomen bedeuten. Beispiele geeigneter Reste Ar¹ bis Ar⁵ sind Phenylen, Bisphenylen, Terphenylen, 1,5-Naphtylen, 1,6-Naphtylen, 1,5-Anthrylen, 9,10-Anthrylen oder 2,6-Anthrylen. Darunter werden 1,4-Phenylen und 4,4'-Bisphenylen bevorzugt. Vorzugsweise sind diese aromatischen Reste nicht substituiert. Sie können jedoch einen oder mehrere Substituenten tragen. Geeignete Substituenten sind beispielsweise Alkyl-, Arylalkyl-, Aryl-, Nitro-, Cyano-, Alkoxygruppen oder Halogenatome. Zu den bevorzugten Substituenten zählen Alkylreste mit bis zu 10 Kohlenstoffatomen, wie Methyl, Ethyl, i-Propyl, n-Hexyl, i-Hexyl, C₁- bis C₁₀-Alkoxyreste, wie Methoxy, Ethoxy, n-Propoxy, n-Butoxy, Arylreste mit bis zu 20 Kohlenstoffatomen wie Phenyl oder Naphthyl sowie Fluor und Chlor. T und Q können gleich oder verschieden voneinander sein und unabhängig voneinander -O-, SO₂-, -CO- oder -COO- bedeuten, wobei -O- und -CO- bevorzugt sind.

Die Variablen x, y und z können gleich oder verschieden voneinander sein und unabhängig voneinander eine ganze Zahl von 0 bis 3 bedeuten.

Als Beispiele bevorzugter Polyaryletherketone sind solche zu nennen, die sich wiederholende Einheiten ausgewählt aus der Gruppe der Einheiten 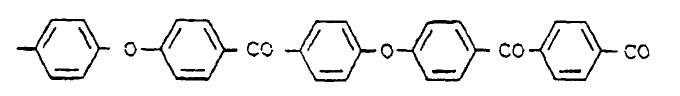 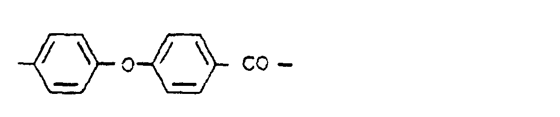 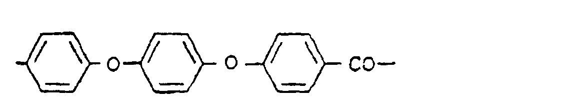 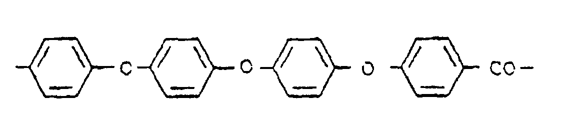 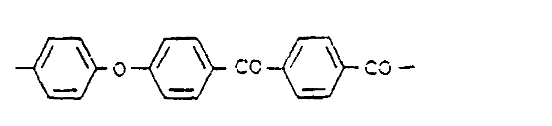 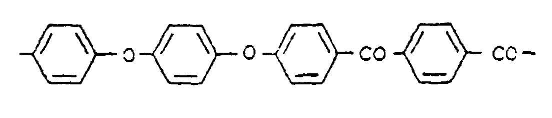 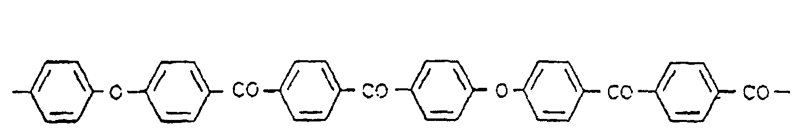 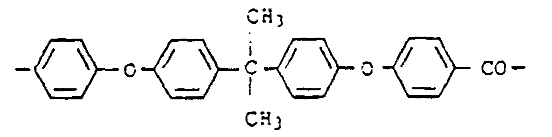 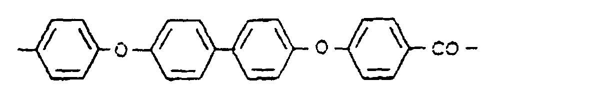 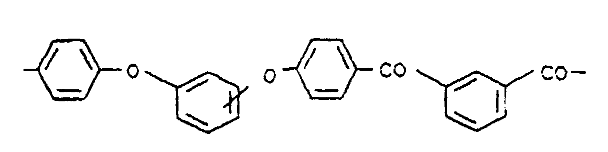 allein oder in Verbindung mit anderen Einheiten enthalten.

Die Polyaryletherketone können auch statistische oder geordnete Copolymere, wie alternierende oder Blockcopolymere sein. Es können auch Mischungen unterschiedlicher Polyaryletherketone verwendet werden. In der Regel weisen die Polyaryletherketone Schmelzvolumenindices (MVI) von 20 bis 500 cm³/10 min (gemessen nach DIN 53 735, bei 400°C und einer Belastung von 10 kg) auf. Bevorzugt werden Polyaryletherketone mit Schmelzvolumenindices von 30 bis 450 cm³/10 min (gemessen nach DIN 53 735, bei 400°C und einer Belastung von 10 kg).

Der Thermoplast (B) der erfindungsgemäßen Reinigungsmasse kann ausgewählt sein aus der Gruppe bestehend aus Polyolefinen, Polyoxymethylen- Homo- oder Copolymeren, Polycarbonaten, Polyestern, Polyamiden, vinylaromatischen Polymeren oder Mischungen davon. Dabei ist es in Hinblick auf die erwähnten Polyamide selbstverständlich, daß von den Vertretern dieser Stoffklasse solche verwendet werden, die von denen, die als Thermoplast (A) verwendet werden können, unterschiedlich sind. Die Auswahl des Vertreters dieser Stoffklasse richtet sich für Thermoplast (A) und Thermoplast (B) nach den jeweils erforderlichen, weiter oben angegebenen Eigenschaften.

Der Thermoplast (A) kann in der Reinigungsmasse granulatförmig vorliegen. Die bevorzugten geometrischen Abmessungen sind die eines zylinder- oder linsenförmiges Granulates mit einem Durchmesser von 1 bis 6 mm und einer Länge von 1 bis 8 mm.

In der erfindungsgemäßen Reinigungsmasse können außerdem ein oder mehrere Zusatzstoffe enthalten sein, die ausgewählt sind aus Verstärkungsmitteln, Verarbeitungshilfsmitteln, UV- und Wärmestabilisatoren oder Flammschutzadditiven.

Im folgenden wird die Erfindung anhand ausgewählter Versuchsbeispiele näher beschrieben.

**Versuche zur Reinigungswirkung der Mischung**

### Beispiel 1

Eine Spritzgießmaschine vom Typ Mannesmann Demag Ergotech 100/310 mit einer Schließkraft von 1000 kN und einem Schneckendurchmesser von 30 mm, auf der glasfaserverstärktes Polyamid 66 mit schwarzer Einfärbung verarbeitet wird (Verarbeitungstemperatur 285°C) soll auf ein leichtfließendes, unverstärktes, hellrot eingefärbtes Polyamid 66 (Verarbeitungstemperatur 285°C) umgestellt werden. Bei dem Werkzeug handelt es sich um ein Einfach-Werkzeug für ein Gehäuse mit außenbeheiztem Heißkanal, Hersteller Eurotool, mit einem Anschnittdurchmesser von 0,8 mm.

### 1. Reinigungslauf

In den Trichter der Spritzgießmaschine werden zunächst 3 kg einer Reinigungsmischung der nachfolgend angegebenen Zusammensetzung gefüllt und bei unveränderter Verarbeitungstemperatur (285°C) zu Formteilen verarbeitet. Die Reinigungsmischung besteht aus: Thermoplast (A) Polyamid 6T/6 im Verhältnis 70:30: mit einer Viskositätszahl (VZ) von 130 g/ml (gemessen in 96%-iger H₂SO₄ als 0,5 gew.-%ige Lösung), mit einem Schmelzpunkt Tm = 298°C, einer Glasübergangstemperatur Tg = 105°C (DSC-Messung), einer Kristallinität von 40%, gemessen durch Röntgenstrahlbeugung; Thermoplast (B) Polyamid 66, VZ = 140 g/ml (gemessen in 96%-iger H₂SO₄ als 0,5 gew.-%ige Lösung), mit einem Mischungsverhältnis von Thermoplast (A) zu Thermoplast (B) von 1:10, was der Mischung von 0,3 kg Polyamid 6T/6 mit 2,7 kg Polyamid 66 entspricht.

Der Reinigungsmischung wird dann 3 kg hellrot eingefärbtes Polyamid 66 nachgeschickt. Der gesamte Zeitaufwand beträgt 40 min. Die anschließend hergestellten Formteile enthalten, visuell beurteilt, weder dunkle Streifen noch Material aus der Reinigungsmischung.

### 1. Vergleichs-Reinigungslauf

Es wird vorgegangen wie bei Reinigungslauf 1, jedoch wird nicht mit der dort genannten Reinigungsmischung gespült, sondern es wird mit unverstärktem, hellrot eingefärbtem Polyamid 66 nachgefahren. Zunächst werden 15 kg Polyamid 66 nachgefahren. Die gefertigten Gehäuse weisen auch nach Fertigung von 50 Schuß noch dunkle Streifen im Angußbereich auf. Nachfolgend wird die Nadelverschlußdüse demontiert und durch eine gereinigte Maschinendüse ersetzt. Nach dem Aufheizen der Maschinendüse werden erneut Formteile gespritzt. Allerdings sind auf der Oberfläche der Formteile noch dunkle Verunreinigungen erkennbar. Erst nach Fertigung von 400 Formteilen, die verworfen werden, ist die Oberflächenqualität der Formteile zufriedenstellend. Der Gesamtzeitbedarf beträgt 5 Stunden bei einem Materialverbrauch von 40 kg.

### 2. Vergleichs-Reinigungslauf

Es wird vorgegangen wie bei Reinigungslauf 1. Die Verarbeitungstemperatur beträgt 285°C. Die Reinigungsmischung besteht jedoch aus:
Thermoplast (A): Polyamid 46, VZ 129 g/ml (gemessen in 96%-iger H₂SO₄ als 0,5 gew.-%ige Lösung), Tm = 295°C, Tg = 75°C, Kristallinität 60%
Thermoplast (B): Polyamid 66, VZ = 140 g/ml (gemessen in 96%-iger H₂SO₄ als 0,5 gew.-%ige Lösung)
Das Mischungsverhältnis aus Thermoplast (A) und Thermoplast (B) beträgt 1:10 (0,3 kg Polyamid 46 mit 2,7 kg Polyamid 66).

Bei der Verarbeitungstemperatur von 285°C kann keine Schmelze durch das Angußsystem gespritzt werden, da nicht aufgeschmolzene Granulatkörner den Anschnitt blockieren. Die Verarbeitungstemperatur muß auf 310°C erhöht werden. Bei dieser Temperatur ist das zugesetzte Polyamid 46 geschmolzen und hat keine Reinigungswirkung mehr. Die Reinigung wird fortgesetzt, wie in dem 1. Vergleichs-Reinigungslauf beschrieben. Der Zeitaufwand beträgt 5,5 Stunden bei einem Materialverbrauch 40 kg.

### Beispiel 2

Eine Maschine vom Typ Netstal Neomat 170/90 mit einem Schneckendurchmesser von 32 mm, ausgerüstet mit einer federbelasteten Nadelverschlußdüse, auf welcher Gehäuse aus schwarzem, brandgeschützten Polystyrol (Verarbeitungstemperatur 220°C) hergestellt werden, soll auf glasklares Polystyrol (Verarbeitungstemperatur 220°C) umgestellt werden.

### 1. Reinigunglauf

Es wird die oben angegebene Reinigungsmischung Polyamid 6T/6 und Polystyrol im Mischungsverhältnis 15:85 eingesetzt.

Zunächst werden 3 kg Reinigungsmischung bei 220°C durch die Spritzeinheit gefahren. Anschließend wird mit 3 kg Polystyrol nachgefahren. Die Produktion der glasklaren Gehäuse aus Polystyrol kann nach insgesamt nur 35 min fortgesetzt werden.

### 1. Vergleichs-Reinigungslauf

Es wird 1% einer Reinigungsflüssigkeit, die 84% H₂O und 16% Kaliumcarbonat enthält, zu 3 kg glasklarem Polystyrol zugegeben. Diese Reinigungsflüssigkeit entspricht den Angaben aus der DE-A-38 02 127. Das Gemisch wird bei 220°C aus der Spritzeinheit extrudiert. Anschließend werden Formteile aus glasklarem Polystyrol gespritzt. Die Formteile sind zwar frei von einer schwarzen Einfärbung, sie sind jedoch nicht glasklar sondern milchig trüb. Dieses Ergebnis ändert sich auch nach der Fertigung von weiteren 100 Schuß nicht. Die Spritzeinheit muß demontiert und mechanisch gereinigt werden. Der hierbei erforderliche Zeitaufwand beträgt 6 Stunden.

### Beispiel 3

Eine Spritzgießmaschine vom Typ Klöckner Ferromatik FM160 mit einem Schnekendurchmesser von 40 mm, auf der Polysulfon verarbeitet wurde (Verarbeitungstemperatur 340°C), soll auf die Verarbeitung von Polyamid 66 mit einer Verarbeitungstemperatur von 290°C umgestellt werden. Es werden Reflektoren für Scheinwerfer hergestellt.

### Reinigungslauf 1

In einem ersten Verfahrensschritt werden 5 kg einer Reinigungsmischung, bestehend aus Polyaryletherketon (PAEK) mit einem Schmelzpunkt Tm = 381°C, einer Glasübergangstemperatur Tg = 170°C und einer Kristallinität von 33% mit Polyamid 6T/6 (wie in Beispiel 1 beschrieben) im Mischungsverhältnis 1:10 bei einer Verarbeitungstemperatur von 340°C durch die Spritzeinheit gefahren. Im nächsten Schritt wird die Verarbeitungstemperatur auf 310°C abgesenkt und 5 kg desselben Polyaryletherketons als Reinigungsmischung mit Polyamid 66 in einem Mischungsverhältnis von 1:10 nachgefahren. Danach wird die Temperatur auf 290°C abgesenkt und es werden 3 kg des nachfolgenden Polyamids 66 verarbeitet. Anschließend wird die Produktion wieder angefahren. Die Formteile sind frei von Fremdmaterial und weisen eine einwandfreie Oberfläche auf. Der Zeitaufwand betrug 50 min.

### Reinigungslauf nach dem Stand der Technik

Erfahrungsgemäß müssen bei einem Wechsel von Polysulfon auf Polyamid 66 die schmelzeführenden Metalloberflächen der Spritzeinheit mechanisch gereinigt werden. Die Demontage von Maschinendüse, Zylinderkopf und Schnecke mit Schneckenspitze, Sperring und Druckring, die anschließende Reinigung der Metalloberflächen mit Drahtbürste und ähnlichen Gegenständen sowie die Montage der gereinigten Maschinenteile dauert insgesamt 12 Arbeitsstunden. In diesem Zeitraum kann die Maschine nicht betrieben werden.

### 1. Vergleichs-Reinigungslauf

Der 1. Vergleichs-Reinigungslauf wird durchgerührt wie bei dem Reinigungslauf mit einer Verarbeitungstemperatur von 285°C, jedoch mit 10 kg einer Reinigungsmischung bestehend aus Polyamid 46, VZ 129 g/ml (gemessen in 96%-iger H₂SO₄ als 0,5 gew.-%ige Lösung), einem Schmelzpunkt Tm = 295°C, einer Glasübergangstemperatur Tg = 75°C, einer Kristallinität von 60% und Polyamid 66, VZ = 140 g/ml (gemessen in 96%-iger H₂SO₄ als 0,5 gew.-%ige Lösung) in einem Mischungsverhältnis von 1:10. Anschließend wird mit 5 kg Polyamid 66 bei 290°C nachgefahren. Die so hergestellten Formteile weisen braune Schmutzpunkte auf der Oberfläche auf. Der Reinigungvorgang wird wiederholt, doch es wird nachfolgend keine Verbesserung der Qualität der Formteil-Oberfläche festgestellt. Der Versuch wird abgebrochen und entsprechend Reinigungslauf 2 verfahren.

### Versuche zum Verschleißverhalten der eingesetzten Reinigungsmischungen

Die Untersuchugen zum Verschleißverhalten wurden mit einem Modell-Verschleißwerkzeug, daß in "Verschleiß in Kunststoffverarbeitung: Phänomene und Schutzmaßnahmen", Günter Menning, Hanser Verlag 1990, Seiten 194 bis 197 beschreiben ist, durchgeführt. Es wurde eine Maschine Arburg Allrounder 270E mit einer Schließkraft von 500 kN und einem Schneckendurchmesser von 25 mm verwendet. Gemessen wird der Gewichtsverlust an Verschleißeinsätzen nach der Fertigung von 1000 Formteilen.
1. Reinigungsmasse aus Polyamid 66 mit Polyamid 6/6T bei einer Verarbeitungstemperatur von 280°C:
   Gewichtsverlust < 1 mg
2. Reinigungsmasse aus unverstärktem Polyamid 66 bei einer Verarbeitungstemperatur von 280°C:
   Gewichtsverlust < 1 mg
3. Reinigungsmasse aus mit 35 Gew.-% Glasfasern verstärktem Polyamid 66 bei einer Verarbeitungstemperatur von 280°C:
   Gewichtsverlust: 50 mg

Die Ergebnisse zeigen, daß in den Versuchen 1 und 2 kein nennenswerter Verschleiß festgestellt werden konnte. Bei der Verarbeitung von Thermoplasten, die eine Glasfaserverstärkung enthalten (Produkt 3), ist ein zusätzlicher Verschleißschutz der schmelzführenden Metalloberflächen in der Praxis üblich.

## Patentansprüche

1. Reinigungsmasse für Vorrichtungen zur Verarbeitung von thermoplastischen Schmelzen, die im wesentlichen diskrete, plastisch deformierbare Teilchen aus einem ersten Thermoplasten mit einem Schmelzpunkt über 250°C und einer Kristallinität von kleiner oder gleich 50% und einen amorphen oder teilkristallinen zweiten Thermoplasten mit einer Verarbeitungstemperatur, die unterhalb des Schmelzpunktes des ersten Thermoplasten liegt, enthält, wobei der erste Thermoplast mit 1 bis 95 Gew.-% und der zweite Thermoplast mit 5 bis 95 Gew.-% zugegen sind, und sich die gewichtsprozentualen Anteile des ersten und des zweiten Thermoplasten jeweils zu 100% oder weniger ergänzen, **dadurch gekennzeichnet, daß** der erste Thermoplast ausgewählt ist aus der Gruppe bestehend aus teilaromatischen Polyamiden, Polysulfonaten, Polyethersulfonaten, Polyaryletherketonen, Polyetheretherketonen, Polyphenylenethern oder Mischungen davon.

2. Reinigungsmasse nach Anspruch 1, **dadurch gekennzeichnet, daß** die gewichtsprozentualen Anteile des ersten Thermoplast zu zweitem Thermoplast 5-30: 70-95 Gew.-% betragen.

3. Reinigungsmasse nach Anspruch 1 oder 2, **dadurch gekennzeichnet, daß** der zweite Thermoplast ausgewählt ist aus der Gruppe bestehend aus Polyolefinen, Polyoxymethylen- Homo- oder Copolymeren, Polycarbonaten, Polyestem, Polyamiden, vinylaromatischen Polymeren oder Mischungen davon.

4. Reinigungsmasse nach einem der Ansprüche 1 bis 3, **dadurch gekennzeichnet, daß** der erste Thermoplast granulatförmig vorliegt.

5. Reinigungsmasse nach einem der Ansprüche 1 bis 4, **dadurch gekennzeichnet, daß** der erste Thermoplast ein teilaromatisches Polyamid ist.

6. Reinigungsmasse nach Anspruch 5, **dadurch gekennzeichnet, daß** das teilaromatische Polyamid aufgebaut ist aus Terephthalsäure, Isophthalsäure, Caprolactam, Adipinsäure, Hexamethylendiisocyanat, m-Xylendiamin und/oder 2-Methylpentamethylendiamin.

7. Reinigungsmasse nach Anspruch 6, **dadurch gekennzeichnet, daß** Copolymere von zwei oder mehr der genannten Monomere oder Mischungen daraus eingesetzt werden.

8. Reinigungsmasse nach Anspruch 7, **dadurch gekennzeichnet, daß** die Copolymere aus Einheiten aufgebaut sind, die sich von Terephthalsäure und Hexamethylendiamin ableiten.

9. Reinigungsmasse nach Anspruch 8, **dadurch gekennzeichnet, daß** die Polyamide Einheiten enthalten, die sich von ε-Caprolactam und/oder Adipinsäure und/oder Hexamethylendiamin ableiten.

10. Reinigungsmasse nach einem der Ansprüche 1 bis 9, **dadurch gekennzeichnet, daß** die Reinigungsmasse des weiteren einen oder mehrere Zusatzstoffe, ausgewählt aus Verstärkungsmitteln, Verarbeitungshilfsmitteln, UV- und Wärmestabilisatoren und Flammschutzadditiven enthält.

## Claims

1. A cleaning composition for apparatus for processing thermoplastic melts, which composition essentially comprises discrete particles capable of plastic deformation and made from a first thermoplastic with a melting point above 250°C and with a crystallinity of not more than 50%, and comprises an amorphous or semicrystalline second thermoplastic with a processing temperature below the melting point of the first thermoplastic, where the proportion of the first thermoplastic is from 1 to 95% by weight and that of the second thermoplastic is from 5 to 95% by weight, and the total of the percentage proportions by weight of the first and second thermoplastics is always 100% or less, wherein the first thermoplastic has been selected from the group consisting of partially aromatic polyamides, polysulfonates, polyether sulfonates, polyaryl ether ketones, polyether ether ketones, polyphenylene ethers and mixtures of these.

2. A cleaning composition as claimed in claim 1, wherein the percentage proportions by weight of the first thermoplastic and the second thermoplastic are from 5 to 30% by weight and, respectively, from 70 to 95% by weight.

3. A cleaning composition as claimed in claim 1 or 2, wherein the second thermoplastic has been selected from the group consisting of polyolefins, polyoxymethylene homo- or copolymers, polycarbonates, polyesters, polyamides, vinylaromatic polymers and mixtures of these.

4. A cleaning composition as claimed in any one of claims 1 to 3, wherein the first thermoplastic is in the form of pellets.

5. A cleaning composition as claimed in any of claims 1 to 4, wherein the first thermoplastic is a partially aromatic polyamide.

6. A cleaning composition as claimed in claim 5, wherein the structure of the partially aromatic polyamide is composed of terephthalic acid, isophthalic acid, caprolactam, adipic acid, hexamethylene diisocyanate, m-xylylenediamine, and/or 2-methylpentamethylenediamine.

7. A cleaning composition as claimed in claim 6, wherein use is made of copolymers of two or more of the monomers mentioned, or a mixture of these.

8. A cleaning composition as claimed in claim 7, wherein the structure of the copolymers is composed of units which derive from terephthalic acid and from hexamethylenediamine.

9. A cleaning composition as claimed in claim 8, wherein the polyamides contain units which derive from the ε-caprolactam and/or from adipic acid and/or from hexamethylenediamine.

10. A cleaning composition as claimed in any one of claims 1 to 9, which additionally comprises one or more additives selected from reinforcing agents, processing aids, UV stabilizers, heat stabilizers and flame-retardant additives.

## Revendications

1. Produit de nettoyage pour dispositifs de traitement de masses fondues thermoplastiques, qui contient des particules sensiblement distinctes, plastiquement déformables, d'une première matière thermoplastique ayant un point de fusion supérieur à 250°C et une cristallinité inférieure ou égale à 50% et d'une deuxième matière thermoplastique amorphe ou partiellement cristalline ayant une température de traitement qui est inférieure au point de fusion de la première matière thermoplastique, la première matière thermoplastique étant présente à 1 jusqu'à 95% en poids et la deuxième matière thermoplastique à 5 jusqu'à 95% en poids, les fractions en % en poids des première et deuxième matières thermoplastiques donnant respectivement 100% ou moins, **caractérisé en ce que** la première matière thermoplastique est choisie parmi le groupe constitué de polyamides partiellement aromatiques, de polysulfonates, de polyéthersulfonates, de polyaryléthercétones, de polyétheréthercétones, de polyphénylèneéthers ou de leurs mélanges.

2. Produit de nettoyage suivant la revendication 1, **caractérisé en ce que** les fractions en pour-cent en poids de la première matière thermoplastique par rapport à la deuxième matière thermoplastique sont de 5-30/70-95% en poids.

3. Produit de nettoyage suivant l'une des revendications 1 et 2, **caractérisé en ce que** la deuxième matière thermoplastique est choisie parmi le groupe constitué de polyoléfines, d'homopolymères ou de copolymères de polyoxyméthylène, de polycarbonates, de polyesters, de polyamides, de polymères vinylaromatiques ou de leurs mélanges.

4. Produit de nettoyage suivant l'une des revendications 1 à 3, **caractérisé en ce que** la première matière thermoplastique se présente sous la forme d'un produit de granulation.

5. Produit de nettoyage suivant l'une des revendications 1 à 4, **caractérisé en ce que** le la première matière thermoplastique est un polyamide partiellement aromatique.

6. Produit de nettoyage suivant la revendication 5, **caractérisé en ce que** le polyamide partiellement aromatique est constitué d'acide téréphtalique, d'acide isophtalique, de caprolactame, d'acide adipique, de diisocyanate d'hexaméthylène, de m-xylènediamine et/ou de 2-méthylpentaméthylènediamine.

7. Produit de nettoyage suivant la revendication 6, **caractérisé en ce qu'**on met en oeuvre des copolymères de deux ou de plusieurs des monomères cités ou des mélanges de ceux-ci.

8. Produit de nettoyage suivant la revendication 7, **caractérisé en ce que** les copolymères sont constitués d'unités qui dérivent d'acide téréphtalique et d'hexaméthylènediamine.

9. Produit de nettoyage suivant la revendication 8, **caractérisé en ce que** les polyamides contiennent des unités qui dérivent d'ε-caprolactame et/ou d'acide adipique et/ou d'hexaméthylènediamine.

10. Produit de nettoyage suivant l'une des revendications 1 à 9, **caractérisé en ce que** le produit de nettoyage contient, en outre, un ou plusieurs additifs choisis parmi des agents épaississants, des adjuvants de traitement, des stabilisants aux U.V. et à la chaleur et des additifs ignifuges.
